# EUROPEAN PATENT APPLICATION

(11) **EP 1 178 691 A1**
(43) Date of publication of application: **06.02.2002**
(21) Application number: 00250243.3
(22) Date of filing: 17.07.2000
(51) Int. Cl.: H04N 9/82

(54) **Method and device for recording digital supplementary data**

(71) Applicant: DEUTSCHE THOMSON-BRANDT GMBH, 78048 Villingen-Schwenningen (DE)
(72) Inventor: Adolph, Dirk, 30952 Ronnenberg (DE); Winter, Marco, 30173 Hannover (DE)
(74) Representative: Schäferjohann, Volker Willi, Dipl.-Phys.

(57) **Abstract**

Television signals may include sub-titles which are broadcast as Teletext. The problem arises that sub-title information to be stored on a DVD record cannot be switched on and off individually when replaying the DVD record. Thus, there is provided a Teletext to sub-picture converter (6) converting the sub-title information in the Teletext signal (5) separated from the analog TV signal (1) together with color-size-position control signals (7) to a sub-picture data signal. This signal is fed to a sub-picture encoder (10) and a multiplexer (11) in order to obtain a DVD signal. Consequently, the user can handle the sub-title information as usual sub-picture information.

## Description

The present invention relates to a method of recording digital supplementary data transmitted by a video signal. Furthermore, the present invention relates to a device for carrying out such method of recording digital supplementary data as well as to a method and device for retrieving supplementary data.

### Background

According to the state of art video signals like analog TV signals are transmitted by broadcasting facilities. The video signals include vertical blanking intervals which are required for the time it takes the electron gun in a television monitor's cathode-ray tube to move back to the top of the tube. Data can be transmitted in such vertical blanking intervals by a TV provider to special receivers.

TV providers particularly include Teletext or videotext signals within the vertical blanking interval. Teletext is intended to provide information like news, weather forecast or program guide. Usually such Teletext information is not related to the video content of the TV signal. However, TV provider may also transmit Teletext subtitles in the vertical blanking interval or in the transport stream of a DVB stream which definitely belongs to the transmitting video and audio signals. For the event that a consumer wants to record the audio and video signals together with the subtitle information, he has to activate the Teletext decoding so that the Teletext becomes part of the video picture.

With the DVD Technology the recording of video pictures has been standardized to the DVD-VR standard. This standard provides the possibility of embedding Teletext data within the private user data of the picture layer which also encompass the Teletext subtitle. The disadvantages of embedding Teletext data within the private user data are firstly that a user usually does not want to use the complete Teletext and, secondly, that not all DVD-VR decoders presently available on the market support the retrieval of the embedded text data. Furthermore, the DVD-VR standard defines the embedding and decoding method for Teletext data as optional so that subtitle information cannot be decoded by a plurality of decoders.

### Invention

In view of the above disadvantages it is an object of the present invention to provide a method and device for recording digital supplementary data transmitted by a video signal in an efficient way so that these supplementary data are available on a consumer's command.

According to the present invention this object is solved by a method of recording digital supplementary data transmitted by a video signal including the steps of generating a sub-picture unit based on said supplementary data and recording said sub-picture unit on a recoding medium. A corresponding device for carrying out the method includes a recording unit for recording data on a recording medium, a supplementary data separation unit for separating that supplementary data from said video signal, and an encoding unit for generating a sub-picture unit.

In other words, a Teletext subtitle information is transcoded into a DVD sub-picture stream, which can be stored compliantly in DVD-Video and DVD-VR as well. This is possible by transcoding the character set used for the subtitle into a sub-picture bitmap.

According to a preferred embodiment the supplementary data may be separated from the video signal and recorded on the recoding medium. This is being done for video signals exclusively carrying supplementary data without video data. Alternatively, the supplementary data and the video data may be separated from the video signal and recorded together on the recording medium.

Preferably, the supplementary data are transmitted in the vertical blanking interval of the video signal. An example of such supplementary data is Teletext or Closed Caption data.

Furthermore, the presence of supplementary data in the video signal may be detected automatically. If supplementary data are actually detected, they may be recorded together with video data on the recording medium. Thus, a subtitle as supplementary data may be recorded together with the video data stream on the recording medium.

Additionally, the position of the Teletext on the screen may be adjusted individually. Therefore, the sub-picture unit includes at least one positioning command indicating the retrieval position of the supplementary data in a main picture.

Several further commands may be included in the sub-picture unit so that the supplementary data may be displayed in various shapes. For example one or more command for positioning the sub-picture within a main picture, for setting a background color, for setting a character set color, for setting a character set size, for setting a character set type or the like may be encoded within the sub-picture unit. Thus, the colors of the character and character background can be saved in the sub-picture stream. Moreover, the character color and size, the sub-picture background color, for instance transparent, semitransparent, black, inverted, etc., and the sub-title position for instance vertical or horizontal, within the video display may be individually controlled by the user during encoding and be stored in the sub-picture bit stream.

Finally, the characteristic of displaying the sub-picture may vary temporarily in order to adapt for example, the color of the sub-picture to the main picture or background of the main picture.

The above described method steps and the corresponding features may be implemented as a computer program for controlling the recording steps. Usually such a computer program is stored on an appropriate recording medium, for example on a digital versatile disc (DVD) or other common media like CDs.

A method and device for retrieving the supplementary data by reading the sub-picture units and decoding them is also provided by the present invention.

The advantages of the present invention are on the one hand that every standard DVD-Video player and DVD-video recorder is able to decode sub-picture streams including the supplementary data and, thus, these data may be displayed under the control of the user. On the other hand no specific hardware is necessary for the retrieval when the original Teletext subtitles are transcoded into a sub-picture stream.

### Drawings

Exemplary embodiments of the invention are illustrated in the drawings and are explained in more detail in the following description.

### In the Figures:

Figure 1 shows a block diagram of the device according to the present invention;
Figure 2 shows an example of a Teletext row 0;
Figure 3 shows an example of a Teletext row 22;
Figure 4 shows a sub-picture color look-up table; and
Figure 5 shows a sub-picture unit according to the present invention.

### Exemplary embodiments

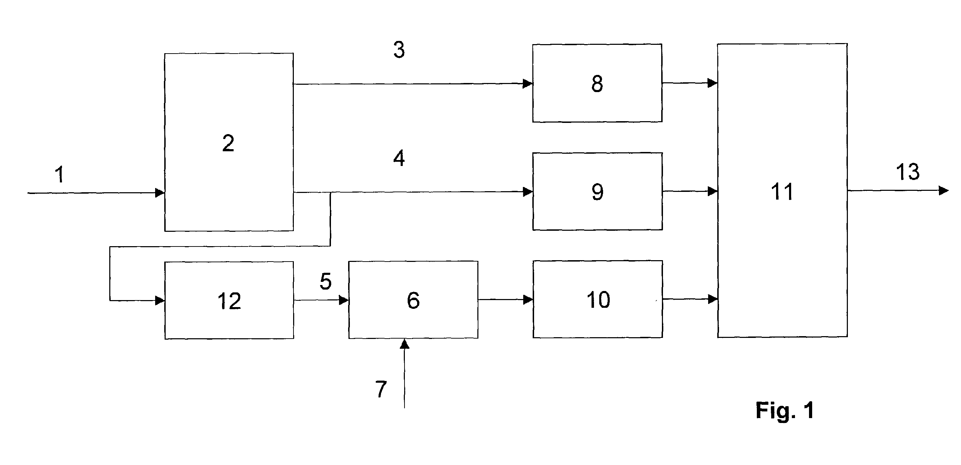

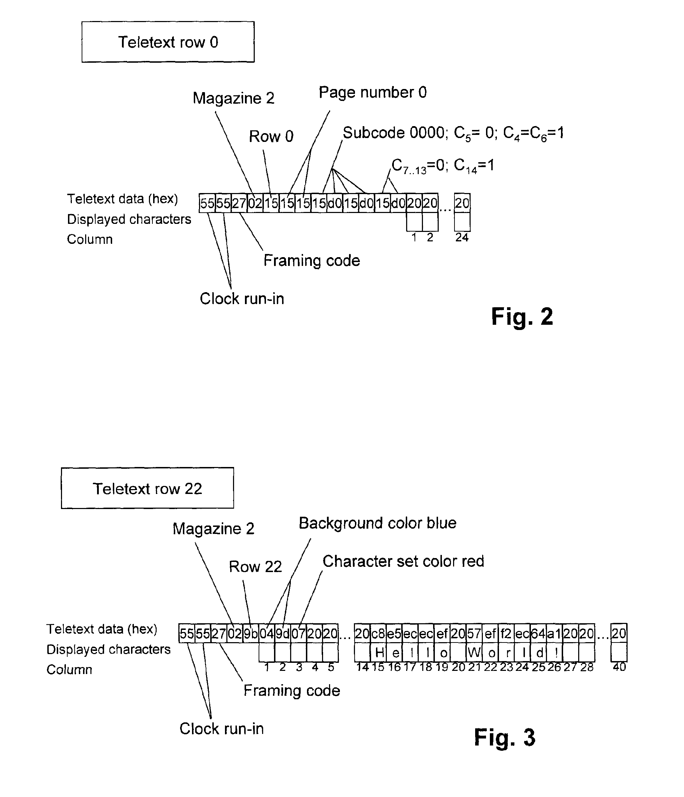

Figure 1 shows a block diagram of an device according to the present invention. The device includes a separator 2, which receives an analog TV signal. The video information inclusive Teletext data is modulated on the picture carrier frequency in the well known manner. The audio information is likewise modulated on the audio sub carrier frequencies for stereo sound. The Teletext data is digitally transmitted in a video-blanking interval of the TV signal. The separator 2 separates from the TV signal an FBAS signal 4 and an audio signal 3. This is done with known filter stages and demodulators. The FBAS signal is fed to a Teletext decoder 12 where the Teletext data is recovered from the FBAS signal in the known manner. The Teletext data received by the separator 2 have a specific, commonly used digital format, published in the Teletext Standard. The Teletext format is described in more detail in connection with Figures 2 and 3.

The Teletext data stream 5 output by the Teletext decoder 12 is input into a Teletext analysis unit 6. Furthermore, a color-size-position control signal 7 is optinally input into the Teletext analysis unit 6. The color-size-position control signal 7 serves for individually controlling the color, the size and the position of the Teletext or sub-picture, respectively, on the video screen. Thus, the output signal of the Teletext analysis unit 6 contains Teletext data as well as control data as to the color, size and position of the sub-picture.

The Teletext signal originally contains the Teletext data and one or more commands for setting the background color and the color of the character set, commands for setting the character set size and the type of the character set. This is why the color-size-position control signal 7 is optional. In a simple embodiment the Teletext analysis unit 6 relies on the information embedded in the Teletext data stream. The color information is e.g. defined in characters 1-3 of the Teletext rows 1-23 (see also Fig. 3). The position information is simply deduced from the Teletext row number. E.g. for Teletext row number 22 it is evident that the information needs to be inserted at the bottom of the picture. The size information is also simply deducable from the teletext row number. It is simply 1/24 of the display height and thus can be fixed in a simple embodiment. It is the task of teletext analysis unit 6 to extract all this information from the Teletext data and to provide the downstream subpicture encoder 10 therewith. Another task is to select the right Teletext page and the corresponding display characters from the Teletext data stream 5 and to forward the selected data to the sub-picture encoder 10. Further commands like one or more commands for positioning the sub-picture in a video picture, commands for setting individual background colors or the like may be added at the receiver side or used for replacing original Teletext commands.

The audio signal 3 is input into an audio encoder 8. The audio encoder 8 digitalises the audio signal and encodes the audio signal according to the DVD standard, for example. Simultaneously, a video encoder 9 digitalises the video signal and encodes the video signal 4 received from the separator 2. This is preferably an MPEG encoding unit, such as MPEG1, MPEG2, MPEG4, MPEG7-encoder or the like. Also other encoders can be used alternatively, e.g. JPEG encoder. A sub-picture encoder 10 provided parallel to the audio encoder 8 and the video encoder 9 encodes the signal output from the Teletext analysis unit 6. Consequently, the sub-picture stream output from the sub-picture encoder 10 includes Teletext data as well as further encoded commands. In the sub-picture encoder 10 a DVD standard conform sub-picture unit is generated as described in the DVD standard.

The signals output from the audio encoder 8, the video encoder 9 and the sub-picture encoder 10 are input into a multiplexer 11. This multiplexer 11 forms a digital data stream 13, for instance in DVD format, which may be recorded on a DVD disc.

The structure of a digital Teletext signal will be described subsequently along with Figures 2 and 3.

Figure 2 shows a typical Teletext row 0. The general structure of Teletext signals is provided by the international Teletext standard. Accordingly, the Teletext signal for one page includes 24 rows. The first row 0, like a header, includes control information. The row is formed by a sequence of hexadecimal numbers of two digits each. Thus, each code number is represented by 8 bit. At the beginning of the row, the first three numbers representing the clock run-in and the framing code are fixedly set for a given type of Teletext. The following magazine number "2" represents the hundred of the Teletext page number. The next Teletext number represents the number of the row. The next two numbers represent the ten and the unit of the page number of the Teletext. The number of a sub-page of a Teletext page is coded within the next four hexadecimal numbers. Control codes for sub-title, new page, etc. follow. The flag C₆ set to "1" indicates that the Teletext includes subtitle data and the flag is used to activate the transcoding process.

The next rows of the Teletext signal contain specific information provided by the broadcasting facility. Typically, sub-title information is sent within the last view rows. An example for such sub-title Teletext row is shown in Figure 3. The row 22 also consists of a sequence of hexadecimal numbers. The beginning of the row 22 is identical with that of row 0, namely including the clock run-in and the framing code. The next hexadecimal numbers represent the magazine and the row numbers. The next numbers are codes for the background color, the character set color and the characters to be displayed.

As can be seen from the above, a Teletext signal is a sequence of numbers separated in several rows. Each code word has a specific meaning like page number, sub-title or background color.

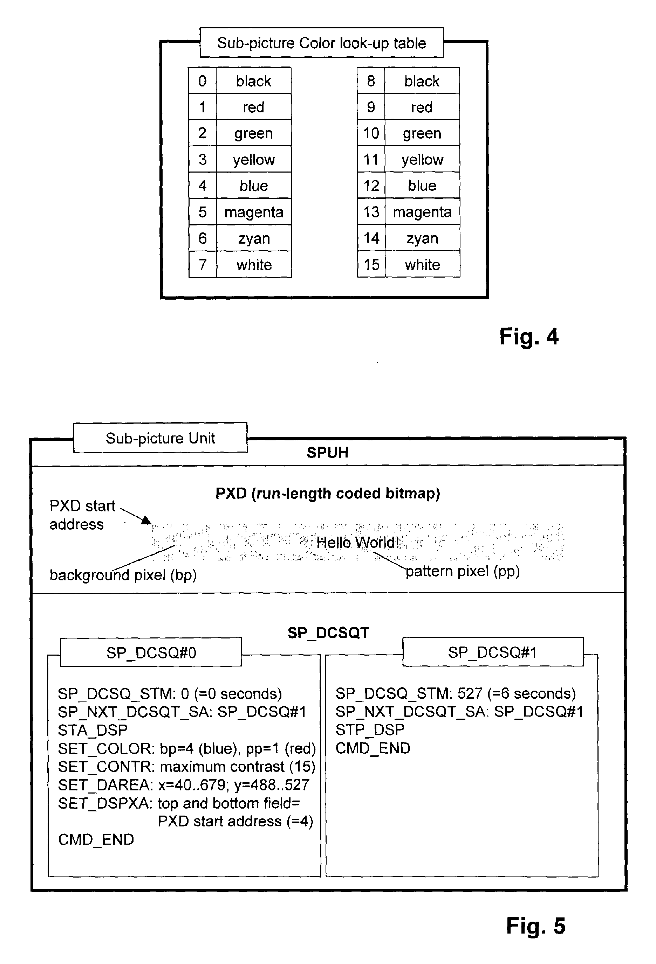

Now referring to Figure 4 it will be explained how a decoder decodes a specific function from a code word of the Teletext. Figure 4 shows a sub-picture color look-up table which represents a relation between a code number and a specific color. The system may provide sixteen colors which are coded by the numbers 0 to 15. Each number relates to a certain color. Thus, number "2" relates to color "green" and number "7" relates to color "white" for example. The second column in Fig. 4 starting from code "8" and ending at code "15" relates to the same colors as the left column, but there may be provided further colors or color mixtures related to the code words of the second column. Furthermore, this sub-picture look-up table may contain more or less than 16 code-color-relations.

The sequence of hexadecimal numbers representing the Teletext signal is transcoded into a sub-picture unit according to the present invention. Such a sub-picture unit is shown in Figure 5. The general structure of a sub-picture unit (SPU) is specified in the DVD standard, DVD Specifications for Read-Only Disc, part 3, Video Specification, version 1.0, August 3, 1996, chapter 5.4.3 Sub-picture Unit(SPU). Accordingly, the sub-picture unit comprises the sub-picture unit header (SPUH), pixel data (PXD) and display control sequence table (SP_DCSQT) which includes sub-picture display control sequences (SP_DCSQ). SP_DCSQ describes the content of the display control on the pixel data. Each SP_DCSQ is seamlessly recorded, attached to the other.

As an example Figure 5 shows a sub-picture unit obtained by transcoding the Teletext signal indicated in Figures 2 and 3 into the sub-picture unit format. The sub-picture unit starts with a sub-picture header (SPUH) including control information. The following part PXD represents the pixel data field, which comprises run-length coded bitmap data. The grey graphic field in Figure 5 represents the bitmap subtitle graphic, which is obtained by transcoding the subtitle characters of Figure 3 into DVD sub-picture format.

As described above the PXD is followed by the display control sequence table (SP_DCSQT). The SP_DCSQT may include several display control sequences (SP_DCSQ). In the case of Figure 5 the SP_DCSQT contains two display control sequences, SP_DCSQ#0 and SP_DCSQ#1. An example of the contents of the display control sequences is also given in Figure 5. Accordingly, a start time (SP_DCSQ_STM) of SP_DCSQ#0 is set to 0. This means that a control sequence starts at the fictitious time 0. Furthermore, the start address of the next SP_DCSQ (SP_NXT_DCSQT_SA) is set to SP_DCSQ#1 shown in the right half of Figure 5. The display of the sub-picture unit is started by the command STA_DSP. The color of each pixel for the pixel data is set by the command SET_COLOR. In the present case the color of the background pixels (bp) is set to 4. According to the look-up table of Figure 4, color 4 stands for "blue". Similarly, the pattern pixels (pp) are set to red color in accordance with the Teletext colors.

The contrast mixture ratio between each pixel of the pixel data and the main picture is set by the command SET_CONTR. In the present case this contrast is set to the maximum value 15.

The sub-picture displaying the sub-title has to be placed within the main picture. Therefore, the display area of the pixel data are set by a rectangle with the command SET_DAREA.

This command allows to set the display area individually by x and y coordinates. In the present case the location of the Teletext row 22 is transformed to the display area x=40..679, y=488..527.

The address of the first pixel data used for displaying is set by the command SET_DSPXA. The corresponding PXD start address is shown in the PXD graphic in Figure 5.

The sub-picture display control sequence SP_DCSQ#0 is terminated by the command CMD_END like each SP_DCSQ.

The second and last display control sequence SP_DCSQ#1 of this exemplary SP_DCSQT is shown in the right half of Figure 5. Accordingly, the execution stop time is set to 527 units corresponding to 6 seconds. The following command relating to the start address of the next sub-picture display control sequence does not produce any effect in the present case since SP_DCSQ#1 is the last one of the SP_DCSQT. The command STP_DSP serves to stop the display of a sub-picture unit. As already described above the command CMD_END terminates the display control sequence.

The above described sub-picture unit is a part of a video object unit according to the DVD standard. Thus, according to the present invention no specific hardware is necessary to display Teletext on the video screen under the control of the user.

Multiple modifications of the disclosed embodiments are possible. E.g. the video signal need not necessarily be an analog video signal. Alternatively it can be a digital video signal, in particular a DVB (Digital Video Broadcast) signal.

It is not necessary that video data and sub-picture data are simultaneously recorded. It can be the case that Teletext or supplementary information is exclusively transferred in a video channel. In this case, on the recording medium only a sub-picture stream is recorded. The teletext analysis unit 6 and the sub-picture encoder 10 can be implemented also in software. Alternatively, they can be implemented in two separate or one single hardware block.

For reproducing the recorded supplementary data information a conventional DVD player or a corresponding DVD Video recorder with sub-picture decoder can be used.

The invention can also be used in a PC-based video recorder. In this case, the inventive method is performed in a corresponding computer program, like the computer programs for DVD software decoders. The recording medium can in this case be simply the hard disk of the PC.

## Claims

1. Method of recording digital supplementary data (5) transmitted by a video signal (1) including the steps of,
generating a sub-picture unit based on said supplementary data (5) and
recording said sub-picture unit on a recording medium.

2. Method according to claim 1, further including the step of separating said supplementary data (5) from said video signal (1) and recording said separated supplementary data (5) on said recording medium.

3. Method according to claim 1, further including the step of separating said supplementary data (5) and video data (4) from said video signal (1) and recording said separated supplementary data (5) and said video data (4) on said recording medium.

4. Method according to one of the preceding claims, wherein said supplementary data (5) are transmitted in a vertical blanking interval of an analog video signal (1) or in the transport stream of a digital video signal, in particular DVB stream, preferably as Teletext, Videotext, Electronic Program Guide or Closed Caption.

5. Method according to one of the preceding claims, further including the step of automatically detecting the presence of supplementary data (5) in said video signal (1) and in case of their presence automatically recording them in said sub-picture unit together with video data (4) on said recording medium.

6. Method according to one of the preceding claims, wherein said supplementary data (5) include at least one subtitle.

7. Method according to one of the preceding claims, wherein said sub-picture unit includes at least one positioning command indicating the position of said supplementary data in a main picture.

8. Method according to claim 7, wherein the sub-picture unit further includes one or more of the following commands:
command for setting a background color,
command for setting a pattern pixel color.

9. Method according to one of the preceding claims, wherein the characteristic of displaying said sub-picture is variable temporarily, preferably for adapting the color of the sub-picture to the picture or background of the picture.

10. Computer program product with program steps according to one of the preceding method claims.

11. Recording medium including a computer program according to claim 10.

12. Device for carrying out the method according to one of the claims 1 to 10 including
a recording unit for recording data on a recording medium,
a supplementary data separation unit (2) for separating said supplementary data (5) from said video signal (1),
an encoding unit (10) for generating a sub-picture unit with said supplementary data (5) to be recorded on said recording medium.

13. Device according to claim 12, further including a compression unit (9) for video data (4), particularly an MPEG video encoder, for transforming video data into an MPEG data stream.

14. Device according to claim 12 or 13, further including a Videotext or Teletext decoder or a Closed Caption decoder or an EPG decoder.

15. Device according to claim 12, 13 or 14 operable as video recorder recording the data on a recording disk, particularly a DVD recorder.

16. Device according to one of the claims 12 to 15, further including a decoding unit for decoding said sub-picture unit for reproducing said supplementary data.

17. Device according to one of the claims 12 to 16, further including a decompression unit, particularly an MPEG video decoder for generating a video signal from said MPEG data stream.

18. Method of retrieving digital supplementary data recorded according to one of the claims 1 to 9 including the steps of,
reading said sub-picture unit from the recording medium and
decoding said sub-picture unit for displaying said supplementary data on a video screen.

19. Device for carrying out the method of claim 18 including
reading means for reading said sub-picture unit from said recording medium and
decoding means for decoding said sub-picture unit for displaying said supplementary data on a video screen.
